# EUROPÄISCHE PATENTANMELDUNG

(11) **EP 2 878 511 A1**
(43) Veröffentlichungstag der Anmeldung: **03.06.2015**
(21) Anmeldenummer: 14003901.7
(22) Anmeldetag: 20.11.2014
(51) Int. Cl.: B62B 5/00

(54) **Von einem Bediener steuerbares Flurförderzeug**

(30) Priorität: 20.11.2013 DE 102013019335
(71) Anmelder: EXPRESSO DEUTSCHLAND GMBH, 34123 Kassel (DE)
(72) Erfinder: Köhler, Holger, 36448 Schweina (DE); Nägel, Wolfgang, 34123 Kassel (DE)
(74) Vertreter: Prünte, Peter

(57) **Zusammenfassung**

Ein von einem externen Bediener steuerbares Flurförderzeug (10), das mit mindestens einem elektrischen Motor zur Erzeugung eines Antriebsmoments auf einem oder mehreren Antriebsrädern, mit einem dem Flurförderzeug (10) zugeordneten oder zuordenbaren Steuerungssystem (11) zur Steuerung der Bewegung des Flurförderzeugs (10) und mit einer Bedienanordnung zur Betätigung des Steuerungssystems ausgestattet ist, ist dadurch gekennzeichnet, dass die Bedienanordnung lösbar mit dem Flurförderzeug verbunden ist.

## Beschreibung

Die Erfindung bezieht sich auf ein von einem externen Bediener steuerbares Flurförderzeug, das mit mindestens einem elektrischen Motor zur Erzeugung eines Antriebsmoments auf einem oder mehreren Antriebsrädern, mit einem dem Flurförderzeug zugeordneten oder zuordenbaren Steuerungssystem zur Steuerung der Bewegung des Flurförderzeugs und mit einer Bedienanordnung zur Betätigung des Steuerungssystems ausgestattet ist.

Unter Flurförderzeugen oder Flurfördergeräten sind Transportmittel zum horizontalen Transport von Gütern verstanden, die zumeist innerbetrieblich zu ebener Erde eingesetzt werden. Flurförderzeuge laufen mit ihren Rädern auf Flur und sind frei lenkbar. Sie sind zum Befördern, Ziehen und Schieben von Lasten eingerichtet. Insbesondere können die Flurförderzeuge auch Hubeinrichtungen zum Heben und Stapeln von Lasten umfassen, beispielsweise auch zum Einlagern in Regalen. Die mit Hubeinrichtungen ausgestatteten Flurförderzeuge können Lasten selbst aufnehmen und absetzen. Nachstehend werden aber auch Hebezeuge und Regalförderer als Flurförderzeuge verstanden. Insbesondere betrifft die Erfindung daher Plattformwagen, fahrbare Scherenhubtische, Gabelhubwagen und sonstige Transportwagen.

In DE 197 23 973 A1 wird ein Verteiler- oder Zustellerwagen mit einer frei programmierbaren elektronischen Steuer- und Regeleinheit offenbart.

Aus der DE 10 2007 036 636 A1 ist eine Puppe bekannt, die mit mehreren Elektroden versehen ist, über die die Detektion der Gesten eines spielenden Kindes gegenüber der Puppe erfasst und in Reaktion darauf Sprachwiedergabefunktionen der Puppe angesteuert werden. Ebenso lassen sich mechatronische Komponenten der Puppe ansteuern. Dadurch soll ein realitätsnaher Dialog zwischen dem Kind und der Puppe aufgebaut werden. Die Erfassung der räumlichen Bewegung einer Hand des Kindes gegenüber dem Detektionssystem erfolgt auf der Grundlage feldelektrischer Wechselwirkungseffekte. Das Detektionssystem ist hierzu mit Elektroden ausgestattet, die als solche in LC-Netzwerke eingebunden sind und Signale abgeben, aus denen sich der Abstand der Hand zur Elektrode bestimmen lässt. Anhand der Signale kann der Bahnverlauf einer Geste errechnet werden. Aus dem errechneten Bahnverlauf werden dann die Gesten ermittelt, denen ein derartiger Bahnverlauf der Bewegung der Hand entspricht. Hierbei soll die Errechnung von Abstands- und Bahninformation über eine elektronische Schaltung bewerkstelligt werden, auf der in einem elektronischen Speicher charakteristische Gestenbahnen hinterlegt sind.

Es ist die Aufgabe der Erfindung, ein Flurförderzeug der eingangs genannten Art derart zu verbessern, dass es sich auf einfache Weise und individuell von jedem Benutzer steuern lässt.

Gemäß der Erfindung wird diese Aufgabe dadurch gelöst, dass die Bedienanordnung lösbar mit dem Flurförderzeug verbunden ist.

Angepasst an den Einsatzzweck des jeweils von dem Bediener zu steuernden Flurförderzeugs, lassen sich verschiedene Bedienanordnungen einsetzen, die unterschiedliche Funktionen vereinen oder die mit verschiedenen Tastern, Schaltern und Bedienelementen und/oder Sensoren ausgestattet sind. Daraus resultiert auch die Anordnung verschiedener Leitungen, um Daten zwischen dem Bediener und der Motor- und Steuerungseinheit des Flurförderzeugs weiterzuleiten.

Um eine leichte Auswechselbarkeit der Bedienanordnung zu bewerkstelligen und um andererseits eine manuelle Trennung an anderen schwerer zugänglichen Stellen des Flurförderzeugs zu vermeiden, ist erfindungsgemäß die Bedienanordnung lösbar an dem Flurförderzeug angebracht.

Wenn das Flurförderzeug mit einer Deichsel ausgestattet ist, lässt sich vorsehen, dass die Bedienanordnung an dem Deichselkopf der Deichsel angeordnet ist. Dabei werden gemäß der Erfindung mit Vorteil die Verbindungsleitungen mit Schnellkupplungen, insbesondere automatisch betätigbaren Schnellkupplungen, oder Steckverbindungen, insbesondere automatisch betätigbaren Steckverbindungen, versehen. Die Schnellkupplungen von medienführenden Verbindungsleitungen, beispielsweise Hydraulikleitungen, bzw. die Steckverbindungen zum vollständigen Abziehen der Bedienungsanordnung vom Deichselkopf oder vom Gehäuse des Flurförderzeugs mittels der Schnellkupplung leicht getrennt oder wieder verbunden werden.

Die Schnellkupplung lässt sich bevorzugt durch eine Rastverbindung, einen Bajonettverschluss oder durch eine Steck-, Schnapp- oder Klinkenkupplung, realisieren.

Aus Sicherheitsgründen kann vorgesehen werden, dass wenigstens ein zusätzliches Arretiermittel, insbesondere eine Schraubkupplung oder eine weitere Schnellkupplung, ausgestattet ist.

Vorzugsweise ist gemäß einer Ausgestaltung der Erfindung die Bedienanordnung durch eine Schnellkupplung mit optischen und/oder elektrischen Leitungen, insbesondere Datenleitungen, und Leitungen zur mechanischen, hydraulischen oder pneumatischen Übertragung einer Kraft und/oder eines Drehmoments auf das Flurförderzeug verbindbar.

Gemäß einer weiteren bevorzugten Ausführungsform der Erfindung ist das Steuerungssystem mit einem Sensor oder mit einer Mehrzahl von Sensoren zur Erkennung von Daten eines Bedieners ausgestattet. Hierbei werden die Daten des Bedieners durch das Steuerungssystem in Steuersignale zur Steuerung des Motors umsetzbar und von dem Motor in ein Antriebsmoment umgesetzt. Im Bereich der Bedienanordnung lassen sich Sensoren vorsehen, die Signale zur Einwirkung auf das Steuerungssystem erzeugen und an dieses senden.

Der Begriff "Daten" umfasst beispielsweise Gesten eines Bedieners. Der Begriff "Daten" im Sinne der vorliegenden Erfindung ist jedoch nicht beschränkt auf Gesten, d. h. auf eine bestimmte Form oder Bewegung einer Hand, des Kopfes, des Rumpf, der Füße oder Arme des Bedieners des Geräts oder auf eine komplexe Bewegungsform, die der Bediener durch den Einsatz des ganzen Körpers oder von Teilen des Körpers erzielt, sondern umfasst auch jegliche andere Daten des Bedieners, beispielsweise den Druck, den dieser mit seinen Fingern, mit einem einzelnen Finger oder mit der ganzen Hand auf einen Handgriff ausübt.

Gemäß der Erfindung wird ein Flurförderzeug geschaffen, das eine Schaltungsanordnung umfasst, die Signale aufgrund von Eingangssignalen verarbeitet. Die Eingangssignale werden beispielsweise aufgrund eines von der Hand des Bedieners auf einen Handgriff ausgeübten Drucks oder von Handgesten verarbeitet, die der Bediener gegenüber dem Detektionssystem vollzieht. Alternativ oder in Kombination mit den oben angegebenen Erfassungsmöglichkeiten kommt eine akustische Signalerkennung in Betracht. Die Eingangssignale korrelieren dabei mit der räumlichen Bewegung der Hand oder der Finger der Hand. Das Flurfördergerät ist beispielsweise mit einem Spracherkennungssystem ausgestattet. Hierbei werden die Eingangssignale derart generiert oder transformiert, dass Transfersignale erzeugt werden, deren Frequenzband von dem Frequenzband der einem Spracherkennungssystem zugänglichen Klangsignale umfasst wird. Hierbei erfolgt die Interpretation der Handgesten über das Spracherkennungssystem auf der Grundlage von Transfersignalen. Jedoch kann die Erfassung der Handgesten auch auf einem rein optischen Wege erfolgen. Hierbei werden die von der Hand zurückgelegten Wege und die von der Hand gebildeten Formen erfasst und mit einem in der Schaltung abgelegten Muster, insbesondere mit einem bedienerspezifischen Muster, verglichen und aus diesem Muster der von dem Bediener übermittelte Befehl abgeleitet.

Im Falle der Umwandlung der Gesten in korrespondierende Sprachsignale lässt sich mit Vorteil auf die im Bereich der Spracherkennung entwickelten Schaltungs- und Auswertungssysteme zurückgreifen. Dies bedeutet, dass die für die Spracherkennung entwickelten Konzepte und Schaltungen ausschließlich zur Gesteninterpretation herangezogen werden können.

Andererseits ist es aber genauso möglich, Spracherkennungssysteme zusätzlich mit der Funktion der Gestenerkennung auszustatten. Dies ist beispielsweise aus DE 10 2009 014 991 A1 bekannt. Hierbei wird beispielsweise ein Bilderkennungssystem, insbesondere in Verbindung mit einer Kamera, vorgesehen. Es ist möglich, aus Gestenbahnverläufen klangartige Sequenzen abzuleiten. Auf diese Weise lässt sich das System der Gestenerkennung in das System der Spracherkennung, beispielsweise Mikrocontrollern, integrieren. Die klangartigen Sequenzen lassen sich dabei so generieren, dass sie gegebenenfalls in Überlagerung mit Mikrofonsignalen mit einem Zwischenstecker in den akustischen Eingang des Systems eingekoppelt werden. Auf diese Weise lassen sich Spracherkennungsprogramme um Gesteninterpretationsfunktionen erweitern.

Die zur Gestenaufzeichnung oder zur Erfassung der räumlichen Bewegung der Gestenhand oder auch von Fingern vorgesehenen Erfassungselektroden sind beispielsweise in einem, insbesondere an einer Deichsel angebrachten, Griff zum Führen des Flurförderzeugs integriert. Dabei kann jedem Finger der beiden Hände jeweils ein Sensor, insbesondere ein Drucksensor, zugeordnet sein. Ebenso lässt sich alternativ oder zusätzlich wenigstens ein optischer Sensor vorsehen, der statische oder dynamische Handgesten oder Gesten einzelner Finger eines Bedieners erfasst und diese in ein elektrisches Signal zur Betätigung des Flurförderzeugs umwandelt. Eine statische Geste ist beispielsweise eine dem Sensor zugewandte flache Handinnenfläche, die ein Signal zum Halten bezeichnen kann. Eine dynamische Geste zur Fortsetzung einer Bewegung oder auch zur Einleitung einer Drehbewegung ist beispielsweise eine ausholende und auf die Brust des Bedieners weisende Bewegung des Arms und der Hand. Die optischen Signale lassen sich verbinden oder kombinieren mit akustischen Signalen, die der Bediener beispielsweise in ein Headset oder ein an sonstiger Stelle angebrachtes Mikrofon hineinspricht.

Wenn die Sensoren als Drucksensoren ausgestaltet sind, bedeutet ein zunehmender Druck beispielsweise, dass die Antriebsgeschwindigkeit erhöht werden soll. Ein einseitig auf nur einen von zwei Griffen wirkendes Drucksignal bedeutet beispielsweise, dass das Flurförderzeug eine Drehbewegung vollziehen soll. Dabei muss nur ein verhältnismäßig niedriger Druck ausgeübt werden, um die gewünschte Drehbewegung zu erzielen, weil der Antrieb eine entsprechende Kraftübersetzung im Sinne einer Servolenkung vollzieht.

In allen oben bezeichneten Fällen lassen sich die Gesten, seien diese statische Gesten oder mit einer dynamische Geste korrelierende Bahnverlaufssignale in klangartige Signalsequenzen konvertieren, wenn auf die für die Spracherkennung verwendeten Schaltungen zurückgegriffen werden soll. Es versteht sich, dass die Führung des Flurförderzeugs auch berührungslos ohne den obligatorischen Einsatz eines oder zweier Griffe ausgeführt werden kann. In diesem Fall werden Sprachsignale und/oder mit einem Körperteil des Bedieners ausgeführte und mit akustischen bzw. optischen Sensoren erfasste Gesten in entsprechende elektrische Signale umgewandelt.

Gemäß der Erfindung ist vorgesehen, dass alle von dem Bediener erzeugten Signale dem Steuerungssystem zugeführt werden und dass dieses dann den Motor, die Lenkung, etc. des Flurförderzeugs beeinflusst. Das Steuerungssystem ist hierbei entweder fest mit dem Flurförderzeug verbunden oder bevorzugt austauschbar mit dem Flurförderzeug oder einem weiteren Fahrzeug verbindbar. Insbesondere ist das Steuerungssystem auch trainierbar oder als selbstlernendes System ausgeführt. Dies bedeutet, dass genauso wie Sprachkommandos auch Gesten in das System eintrainiert werden und im eintrainierten Zustand in einer Tabelle gespeichert sind, so dass sie in jeder Benutzungssituation des mit dem Steuerungssystem ausgestatteten Fahrzeugs wieder abgerufen werden, um die gewünschte Funktion des Fahrzeugs, d. h. den gewünschten Bewegungsablauf, zu realisieren. Dabei kann jedem Bediener eine individuelle Tabelle entsprechend den von diesem Bediener üblicherweise ausgeführten Gesten und/oder Sprachsignalen zugeordnet werden.

Unter Sprachsignalen im Sinne dieser Erfindung werden jegliche akustische Äußerungen des Bedieners, also Worte, Sätze, aber auch beispielsweise Pfiffe oder sonstige Tonfolgen verstanden.

Neben einer optischen Gestenerfassung können auch andere Formen der Gestenerfassung, wie z. B. kapazitive oder bildverarbeitende Techniken, eingesetzt werden.

Da niemand die gleiche Geste oder das gleiche Sprachsignal zweimal exakt übereinstimmend erzeugen kann, weist das System eine gegenüber Abweichungen von einmal gelernten Gesten bzw. Sprachsignalen tolerante Steuerung auf. Jedoch werden in einer Datenbank, die in dem Steuerungssystem hinterlegt ist oder mit der das Steuerungssystem in Datenverbindung steht, Gesten hinterlegt, die zum Vergleich mit einer aktuell vollzogenen Geste geeignet sind. Je nach einem vorher festgelegten Übereinstimmungsgrad wird die jeweilige Geste dann von der Schaltung akzeptiert oder zurückgewiesen. In der Datenbank sind die Gesten auch jeweiligen Bedienern zugeordnet, die aufgrund bestimmter Kriterien, wie beispielsweise der Stimme, des Fingerabdrucks, von Gesichtskonturen und dergleichen, vom System erkannt wird.

Bevorzugte Ausgestaltungen der Erfindung ergeben sich aus den Unteransprüchen und der Beschreibung, insbesondere in Verbindung mit den Zeichnungen.

Bevorzugt ist eine Gestaltung des Steuerungssystems, bei der dieses durch Bewegungen des Gesichts, eines Auges und/oder wenigstens einer Hand und/oder wenigstens eines Fußes, insbesondere durch die Gehbewegung der Füße, insbesondere in Verbindung mit einem Sprachsignal, in Hinblick auf die Geschwindigkeit und/oder die Bewegungsrichtung des Flurförderzeugs steuerbar oder regelbar ist. Beispielsweise lässt sich durch eine optische Erkennung der Irisbewegung die Geschwindigkeit und/oder die Richtung des Flurförderzeugs bestimmen. Ohne das Flurförderzeug selber mit der Hand an einem Griff führen zu müssen, ist es gemäß einer Ausführungsform der Erfindung ausreichend, wenn der Bediener vor dem Steuerungssystem hergeht und die Bewegung seiner Füße von einer Kamera oder einem anderen optischen Sensor aufgenommen wird, um in einer Schaltung daraus die Geschwindigkeit zu berechnen, die das Steuerungssystem auf das Flurförderzeug übertragen soll.

Vorzugsweise ist das Steuerungssystem an einer einem Bediener zugewandten Seite des Flurförderzeugs angeordnet.

Von Vorteil ist es hierbei, wenn sich das Steuerungssystem auswechselbar an dem Flurförderzeug anordnen und durch eine Steckverbindung an den Motor oder an das Flurförderzeug anschließen lässt, wenn der Motor in diesem integriert ist.

In einer bevorzugten Ausgestaltung ist vorgesehen, dass der Bediener als Mitgänger das Flurförderzeug steuert. Hierbei lässt sich das Steuerungssystem beispielsweise durch Drucksignale des Bedieners steuern. Der Bediener gibt diese Drucksignale unmittelbar an das Steuerungssystem oder an eine dem Steuerungssystem zugeordnete Anordnung ab.

Im Falle einer Ausgestaltung des Flurförderzeugs, bei der der Bediener mit seiner Hand Drucksignale an den Haltegriff einer Lenkeinrichtung oder Deichsel abgibt, ist die Lenkeinrichtung bzw. die Deichsel mit wenigstens einem Drucksensor ausgestattet, so dass das Steuerungssystem aufgrund der Drucksignale die Geschwindigkeit und die Richtung des Flurförderzeugs anpasst.

Bevorzugt ist das Flurförderzeug mit einer Regeleinrichtung zur Regelung der Geschwindigkeit ausgestattet, der die Geschwindigkeit als Führungsgröße über den Druck und/oder die Bewegung wenigstens einer Hand des Bedieners Bewegungen des Gesichts, eines Auges und/oder wenigstens einer Hand und/oder wenigstens eines Fußes zugeführt wird.

Hierbei werden mit Vorteil die Drehzahl, das Drehmoment oder die Stromaufnahme des Motors als Regelgröße verwendet.

Nachstehend wird die Erfindung in einem Ausführungsbeispiel näher erläutert. Es zeigen:
- Fig. 1: eine schematische Darstellung eines Regelkreises zum Regeln der Geschwindigkeit eines Flurförderzeugs,
- Fig. 2: ein Flurförderzeug mit einer Deichsel und einem Handgriff zur Betätigung durch einen Bediener in einer Seitenansicht,
- Fig. 3: das Flurförderzeug gemäß Figur 2 in der Draufsicht und
- Fig. 4: den Handgriff in einer vergrößerten Darstellung, ebenfalls in der Draufsicht.

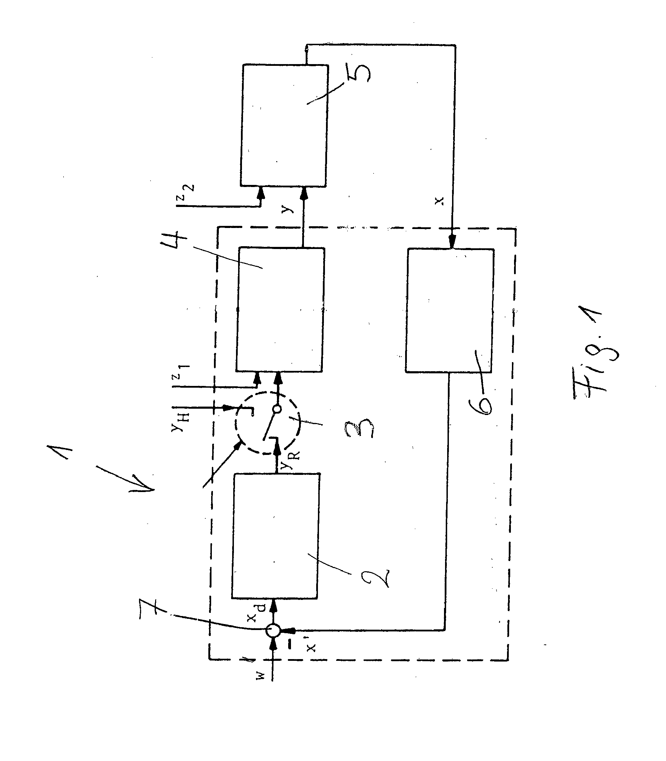

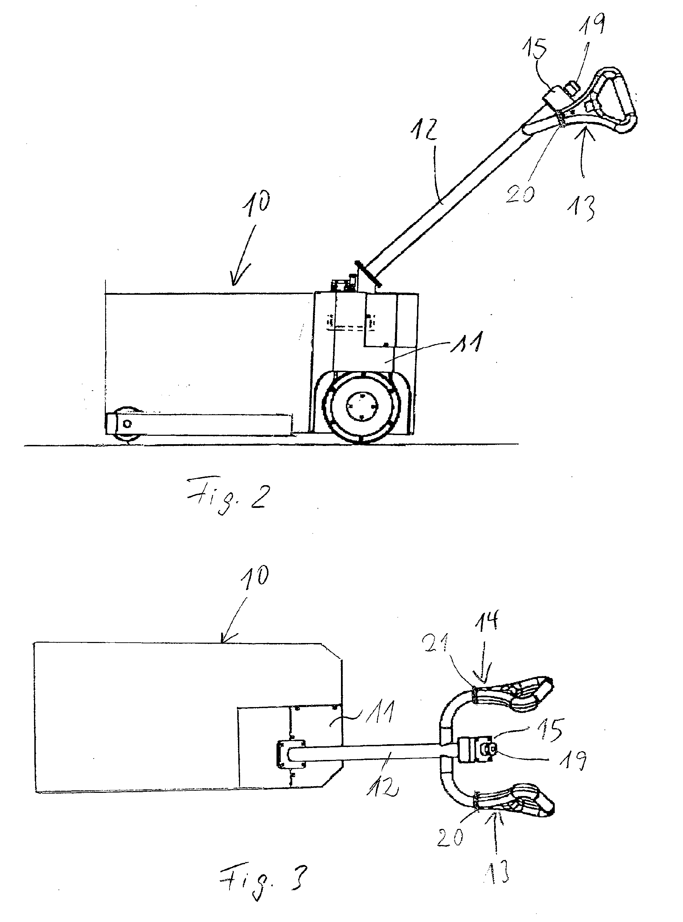

In einem Regelkreis 1 (Fig. 1) zur Regelung der Geschwindigkeit eines Flurförderzeugs 10 (Fig. 2, 3), d. h. sowohl des Absolutbetrags der Geschwindigkeit als auch der Bewegungsrichtung des Flurförderzeugs 10, wird als Führungsgröße w die Geschwindigkeit des Bedieners vorgegeben. Aus der Differenz der Größe w zu einer elektrischen Signalgröße x' wird eine Regeldifferenz x_{d} gewonnen, die einem Regler 2 zugeführt wird.

Es lässt sich ein als Hand- oder als Automatikschalters ausgeführter Schalter 3 vorsehen, mittels dessen eine Größe y_{H} von Hand und/oder eine Größe y_{R} für den Anfahrvorgang zugeführt wird. Entsprechendes kann auch für den Anhaltevorgang gelten.

Von dem Regler 2 wird eine von diesem aus der Regeldifferenz x_{d} erzeugte Signalgröße y_{R} einem Stellglied 4, d. h. dem Antriebsmotor, zugeführt, der das Flurförderzeug 10 antreibt, das einschließlich der Laufräder oder Laufrollen des Flurförderzeugs 10 eine Regelstrecke 5 des Flurförderzeugs 10 bildet, dem der Motor als Stellgröße y sein Antriebsdrehmoment zuführt. Sowohl im Bereich des Stellglieds 4 als auch im Bereich der Regelstrecke 5 können Störgrößen z₁ bzw. z₂ auftreten. Eine Störgröße z₂ ist beispielsweise eine Bodenunebenheit oder eine Bodenschwelle, die die Geschwindigkeit und/oder auch die Richtung des Flurförderzeugs 10 beeinflusst. Nach Durchlaufen der Regelstrecke 4 hat das Flurförderzeug 10 eine Geschwindigkeit, ein Drehmoment oder eine Drehzahl x, d. h. den Istwert der Regelgröße, der einer Messeinrichtung 6 zugeführt wird. Diese gewinnt aus dem Wert x eine elektrische Signalgröße x', die sie einem Subtrahierer 7 zuführt, in dem, wie oben beschrieben, die Regeldifferenz x_{d} gewonnen wird.

Der Regelkreis 1 ist in einem Steuerungssystem 11 (Fig. 2, 3) des Flurförderzeugs 10 integriert. Zur Zuführung der Führungsgröße w ist das Flurförderzeug 10 mit einer Deichsel 12 ausgestattet, die an ihrem bedienerseitigen Ende mit Handgriffen 13, 14 und Sensoren ausgestattet ist. Als Sicherheitsfunktion kann ein Not-Aus- in einem ebenfalls an der Deichsel 12 angebrachten Endstück 15 vorgesehen werden.

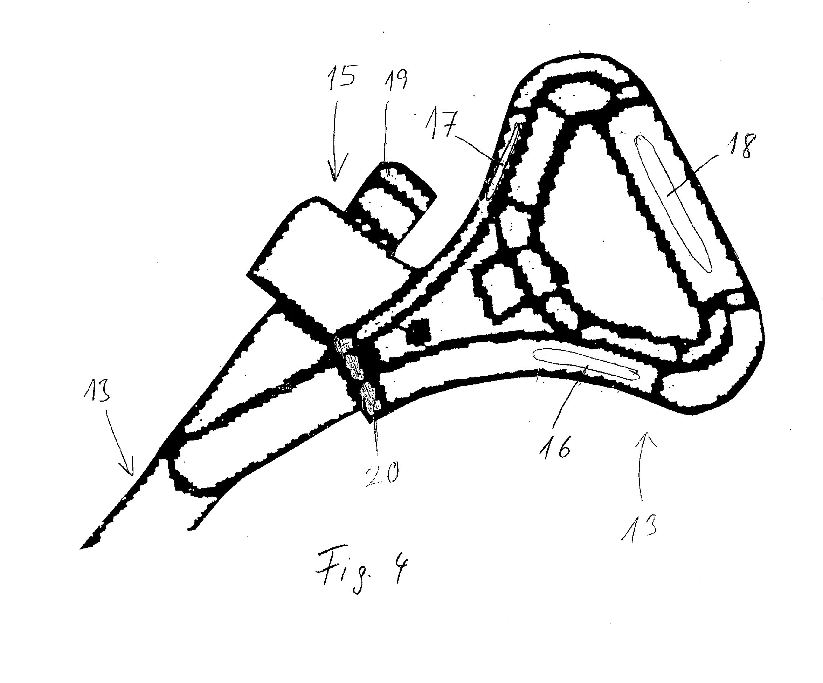

Die Handgriffe 13, 14 tragen jeweils Sensoren 16, 17 und 18 (Fig. 4). Die Sensoren 16, 17 sind vorzugsweise Drucksensoren, die den Fahrtrichtungen "Vorwärts" (drücken) bzw. "Rückwärts" (ziehen) zugeordnet sein können. Die Sensoren können einzelnen Fingern beider Hände des Bedieners zugeordnet sein (dargestellt sind die dem Zeigefinger bis zum kleinen Finger jeder Hand zugeordneten Sensoren). Auf den den dargestellten Seiten der Handgriffe gegenüberliegenden Seiten können Sensoren für die Daumen der beiden Hände vorgesehen werden).

Der Sensor 18 ist jeweils vorzugsweise als optischer, induktiver oder kapazitiver Sensor ausgeführt, der das Vorhandensein eines bestimmten Bedieners ermittelt. Diese vorgelagerte Sicherheitsfunktion kann als Freigabesignal für das Steuerungssystem 11 ausgewertet werden und ein unbeabsichtigtes Ingangsetzen des Flurförderzeugs 10 vermeiden. Der Bediener kann auch anhand biometrischer, insbesondere optischer Daten, d. h. beispielsweise des Gesichtsausdrucks oder auch von Fingerlinien, ermittelt werden, so dass in dem Regelkreis 1 entsprechende Anpassungen vorgenommen werden können.

Ebenso kann der Sensor 18 als Gestensensor dienen, der, wenn zunächst der Bediener aufgrund biometrischer Daten bestimmt worden ist, eine Bewertung der Gesten unter Rückgriff auf in einer Datenbank hinterlegte Gesten des entsprechenden Bedieners erlaubt. Zusätzlich kann an dem Steuerungssystem ein akustischer Sensor 19, beispielsweise ein Mikrofon, vorgesehen sein, der zur Aufnahme von Sprachsignalen dient, die entweder unabhängig von den durch die übrigen Sensoren 16 bis 18 aufgenommenen Signale verwertet werden oder in Kombination mit den von den Sensoren 16 bis 18 erhaltenen Signalen.

Gemäß der Darstellung in Fig. 2 bis 4 ist jeder der beiden Handgriffe 13, 14 mit einer Schnellkupplung 20 bzw. 21 ausgestattet, um jeden von ihnen einzeln zu entfernen. Dadurch lässt sich auch ein Missbrauch des Flurförderzeugs 10 durch Unbefugte verhindern. Im Bereich eines der Handgriffe 13, 14 kann auch ein Not-Ein/Aus-Schalter realisiert sein.

### Bezugszeichenliste

- 1: Regelkreis
- 2: Regler
- 3: Schalter
- 4: Stellglied
- 5: Regelstrecke
- 6: Messeinrichtung
- 7: Subtrahierer
- 8: -
- 9: -
- 10: Flurförderzeug
- 11: Steuerungssystem
- 12: Deichsel
- 13: Handgriff
- 14: Handgriff
- 15: Endstück
- 16: Sensor
- 17: Sensor
- 18: Sensor
- 19: Sensor
- w: Führungsgröße
- x: Geschwindigkeit
- x': Signalgröße
- x_{d}: Regeldifferenz
- y_{R}: Signalgröße
- z₁: Störgröße
- z₂: Störgröße
- 20: Schnellkupplung
- 21: Schnellkupplung

## Patentansprüche

1. Von einem externen Bediener steuerbares Flurförderzeug (10), das mit mindestens einem elektrischen Motor zur Erzeugung eines Antriebsmoments auf einem oder mehreren Antriebsrädern, mit einem dem Flurförderzeug (10) zugeordneten oder zuordenbaren Steuerungssystem (11) zur Steuerung der Bewegung des Flurförderzeugs (10) und mit einer Bedienanordnung zur Betätigung des Steuerungssystems ausgestattet ist,
**dadurch gekennzeichnet,**
**dass** die Bedienanordnung lösbar mit dem Flurförderzeug verbunden ist.

2. Flurförderzeug nach Anspruch 1,
**dadurch gekennzeichnet,**
**dass** die Bedienanordnung an einem Deichselkopf einer an dem Flurförderzeug angebrachten Deichsel angeordnet ist.

3. Flurförderzeug nach Anspruch 2,
**dadurch gekennzeichnet,**
**dass** die Bedienanordnung durch eine Schnellkupplung (20, 21), insbesondere durch einen Rastverbindung, durch einen Bajonettverschluss oder durch eine Steck-, Schnapp- oder Klinkenkupplung, an die Deichsel anschließbar und von der Deichsel lösbar ist.

4. Flurförderzeug nach Anspruch 3,
**dadurch gekennzeichnet,**
**dass** wenigstens ein zusätzliches Arretiermittel, insbesondere eine Schraubkupplung oder eine weitere Schnellkupplung, ausgestattet ist.

5. Flurförderzeug nach einem der vorhergehenden Ansprüche,
**dadurch gekennzeichnet,**
**dass** die Bedienanordnung durch eine Schnellkupplung (20, 21) mit optischen und/oder elektrischen Leitungen, insbesondere Datenleitungen, und Leitungen zur mechanischen, hydraulischen oder pneumatischen Übertragung einer Kraft und/oder eines Drehmoments auf das Flurförderzeug verbindbar ist.

6. Flurförderzeug nach einem der vorhergehenden Ansprüche,
**dadurch gekennzeichnet,**
**dass** das Steuerungssystem (11) mit einem Sensor oder mit einer Mehrzahl von Sensoren (16, 17, 18, 19) zur Erkennung von Daten eines Bedieners ausgestattet ist und dass die Daten durch das Steuerungssystem (11) in Steuersignale zur Steuerung des Motors (4) umwandelbar und von dem Motor (4) in ein Antriebsmoment umsetzbar sind.

7. Flurförderzeug (10) nach einem der vorhergehenden Ansprüche,
**dadurch gekennzeichnet,**
**dass** das Steuerungssystem (11) durch Gesten, Druckgesten der Hand, Bewegungen des Gesichts, eines Auges und/oder wenigstens einer Hand und/oder wenigstens eines Fußes, insbesondere durch die Gehbewegung der Füße, insbesondere in Verbindung mit Sprachsignalen, in Hinblick auf die Geschwindigkeit und/oder die Bewegungsrichtung des Flurförderzeugs (10) oder ausschließlich durch Sprachsignale steuerbar oder regelbar ist.

8. Flurförderzeug (10) nach einem der vorhergehenden Ansprüche,
**dadurch gekennzeichnet,**
**dass** das Steuerungssystem (11) an einer einem Bediener zugewandten Seite des Flurförderzeugs (10) angeordnet ist.

9. Flurförderzeug (10) nach einem der vorhergehenden Ansprüche,
**dadurch gekennzeichnet,**
**dass** das Steuerungssystem (11) auswechselbar an dem Flurförderzeug (10) angeordnet und durch eine Steckverbindung an den Motor oder an das Flurförderzeug anschließbar ist.

10. Flurförderzeug (10) nach einem der einem der vorhergehenden Ansprüche,
**dadurch gekennzeichnet,**
**dass** der Bediener als Mitgänger das Flurförderzeug (10) steuert und dass das Steuerungssystem (11) durch Drucksignale des Bedieners steuerbar ist, die der Bediener unmittelbar an das Steuerungssystem (11) oder an eine dem Steuerungssystem (11) zugeordnete Anordnung (13, 14) abgibt.

11. Flurförderzeug (10) nach einem der vorhergehenden Ansprüche,
**dadurch gekennzeichnet,**
**dass** der Bediener mit seiner Hand Drucksignale an den Haltegriff (13, 14) einer Lenkeinrichtung oder Deichsel (12) abgibt, dass die Lenkeinrichtung bzw. die Deichsel (12) mit wenigstens einem Drucksensor (16, 17) ausgestattet ist und dass das Steuerungssystem (11) aufgrund der Drucksignale die Geschwindigkeit und die Richtung des Flurförderzeugs (10) anpasst.

12. Flurförderzeug (10) nach einem der vorhergehenden Ansprüche,
**dadurch gekennzeichnet,**
**dass** das Flurförderzeug (10) eine Regeleinrichtung (1) zur Regelung der Geschwindigkeit umfasst, der die Geschwindigkeit des Bedieners als Führungsgröße (w) durch den Druck und/oder die Bewegung wenigstens einer Hand des Bedieners, Bewegungen des Gesichts, eines Auges und/oder wenigstens eines Fußes, als Führungsgröße (w) zugeführt wird.

13. Flurförderzeug (10) einem der vorhergehenden Ansprüche,
**dadurch gekennzeichnet,**
**dass** die Drehzahl, das Drehmoment oder die Stromaufnahme des Motors als Regelgröße (x) verwendet wird.
